# EUROPEAN PATENT APPLICATION

(11) **EP 4 749 402 A1**
(43) Date of publication of application: **27.05.2026**
(21) Application number: 24845854.9
(22) Date of filing: 04.07.2024
(51) Int. Cl.: G06F 3/01, G06F 3/00, G06F 3/0346, G06F 3/041, G06F 1/16, H04W 4/80

(54) **WEARABLE ELECTRONIC DEVICE FOR CHANGING MODE RELATED TO USER INPUT AND OPERATION METHOD THEREOF**

(30) Priority: 24.07.2023 KR 20230096389; 28.12.2023 KR 20230194350
(71) Applicant: Samsung Electronics Co., Ltd., Suwon-si, Gyeonggi-do 16677 (KR)
(72) Inventor: KANG, Seungku, Suwon-si Gyeonggi-do 16677 (KR); KIM, Harksang, Suwon-si Gyeonggi-do 16677 (KR); YOON, Jongmin, Suwon-si Gyeonggi-do 16677 (KR)
(74) Representative: Gulde & Partner
(86) International application number: PCT/KR2024/009505
(87) International publication number: WO 2025/023550

(57) **Abstract**

A wearable electronic device configured to be wearable on the head according to an embodiment may comprise a camera, a communication circuit, and a processor. The processor according to an embodiment may be configured to, while driving the wearable electronic device in a first mode of input, identify an external electronic device for controlling the input of the wearable electronic device. The processor according to an embodiment may be configured to receive first information via the communication circuit on the basis of identifying the external electronic device, the first information being information about at least one sensor that has sensed a touch by a user's grip on the external electronic device among a plurality of sensors included in the external electronic device. The processor according to an embodiment may be configured to, on the basis of the first information, change the input mode of the wearable electronic device from the first mode to a second mode corresponding to the at least one sensor among a plurality of modes using the external electronic device. Various other embodiments are possible.

## Description

### [Technical Field]

Various embodiments of the disclosure relate to a wearable electronic device for changing a mode related to a user input and an operating method thereof.

### [Background Art]

An electronic device is being provided in various forms such as a smartphone, a tablet personal computer (PC), or a personal digital assistant (PDA) together with the development of digital technology. Electronic devices are also being developed in a form that may be worn by a user in order to improve portability and accessibility for the user.

An electronic device developed in a form wearable by a user is being developed in a form of a wearable electronic device such as augmented reality (AR) glass, a video see-through (VST) device, and a head mounted display (HMD) device to provide a virtual space in a virtual environment, and various services and additional functions provided through the wearable electronic device are gradually increasing. Communication service providers or electronic device manufacturers competitively develop an electronic device for providing various functions and differentiation from other businesses to improve effective values of such electronic device and satisfy various desires of users. Therefore, various functions provided through wearable electronic devices have been increasingly advanced.

The AR glass, the VST device, or the HMD device may provide a user with realistic experience by display a virtual image while worn on the user's head. The AR glass, the VST device, or the HMD device may replace the usability of a smartphone in various fields, such as a game entertainment, an education, and a social networking service (SNS). A user may receive content that is similar to the real world through the AR glass, the VST device, or the HMD device, and may feel as if he or she is staying in a virtual world through the interaction.

The above-described information may be provided as a related art to help understanding of the disclosure. No claim or determination is made as to the applicability of any of the foregoing as prior art to the disclosure.

### [Detailed Description of the Invention]

### [Technical Solution]

A wearable electronic device configured to be worn on the head, according to an embodiment, may include a camera, a communication circuit, at least one processor, and memory storing instructions. According to an embodiment, the instructions may be configured to, when executed by the at least one processor, cause the wearable electronic device to identify an external electronic device for controlling an input of the wearable electronic device, while an input method of the wearable electronic device is operating in a first mode. According to an embodiment, the instructions may be configured to, when executed by the at least one processor, cause the wearable electronic device to receive first information for at least one sensor that has sensed a touch by a user's grip on the external electronic device among a plurality of sensors included in the external electronic device, through the communication circuit based on identifying the external electronic device. According to an embodiment, the instructions may be configured to, when executed by the at least one processor, cause the wearable electronic device to change an input method of the wearable electronic device from the first mode to a second mode corresponding to the at least one sensor, among a plurality of modes utilizing the external electronic device, based on the first information.

According to an embodiment, an operating method of a wearable electronic device configured to be wearable on a head may include an operation of identifying an external electronic device for controlling an input of the wearable electronic device while an input method of the wearable electronic device is operating in a first mode. According to an embodiment, the operating method of the wearable electronic device may include an operation of receiving first information for at least one sensor that has sensed a touch by a user's grip on the external electronic device among a plurality of sensors included in the external electronic device, based on identifying the external electronic device. According to an embodiment, the operating method of the wearable electronic device may include an operation of changing an input method of the wearable electronic device from the first mode to a second mode corresponding to the at least one sensor, among a plurality of modes utilizing the external electronic device, based on the first information.

According to an embodiment, a wearable electronic device configured to be worn on the head may include a camera, a communication circuit, at least one processor, and memory storing instructions. According to an embodiment, the instructions may be configured to, when executed by the at least one processor, cause the wearable electronic device to identify an external electronic device for controlling an input of the wearable electronic device, while an input method of the wearable electronic device is operating in a first mode. According to an embodiment, the instructions may be configured to, when executed by the at least one processor, cause the wearable electronic device to change, based on identifying the external electronic device, an input method of the wearable electronic device from the first mode to a second mode using the external electronic device. According to an embodiment, the instructions may be configured to, when executed by the at least one processor, cause the wearable electronic device to maintain the second mode, if first information for at least one sensor that has sensed a touch by a user's grip on the external electronic device among a plurality of sensors included in the external electronic device is received, through the communication circuit, within a designated time. According to an embodiment, the instructions may be configured to, when executed by the at least one processor, cause the wearable electronic device to change the second mode to the first mode, if the first information for at least one sensor that has sensed the touch by the user's grip on the external electronic device among the plurality of sensors included in the external electronic device is not received, through the communication circuit, within a designated time.

### [Brief Description of Drawings]

FIG. 1 is a block diagram illustrating an electronic device in a network environment according to various embodiments.
FIG. 2 is a diagram illustrating a configuration of a wearable electronic device according to an embodiment.
FIGS. 3A, 3B, and 3C are diagrams illustrating a front surface and a rear surface of a wearable electronic device according to an embodiment.
FIG. 4 is a diagram illustrating a configuration of an external electronic device according to an embodiment.
FIG. 5A is a diagram illustrating an electronic system including a wearable electronic device and an external electronic device according to an embodiment.
FIG. 5B is a block diagram illustrating an electronic system including a wearable electronic device and an external electronic device according to an embodiment.
FIG. 6 is a flowchart illustrating an operation of a wearable electronic device according to an embodiment.
FIG. 7 is a flowchart illustrating an operation in which a wearable electronic device changes a mode related to a user input from a first mode to a second mode according to an embodiment.
FIG. 8 is a flowchart illustrating an operation in which a wearable electronic device changes a mode related to a user input from a first mode to a second mode according to an embodiment.
FIG. 9 is a flowchart illustrating an operation in which a wearable electronic device changes a mode related to a user input from a first mode to a second mode according to an embodiment.
FIGS. 10A and 10B are diagrams illustrating a mode of a wearable electronic device determined according to a user's gripping posture for an external electronic device according to an embodiment.

### [Mode for Carrying out the Invention]

Hereinafter, an embodiment of the disclosure will be described with reference to accompanying drawings so as to be easily realized by a person having an ordinary knowledge in the art to which the disclosure pertains. However, the disclosure may be realized in many different forms and should not be construed as being limited to the embodiments disclosed herein. In connection with a description of the drawings, like or similar reference numerals may be used for like or similar elements. Furthermore, in the drawings and descriptions related thereto, descriptions of well-known functions and configurations may be omitted for clarity and brevity. The term "user" used in an embodiment of the disclosure may be referred to as a person who use an electronic device or a device (e.g., an artificial intelligence electronic device) that uses an electronic device.

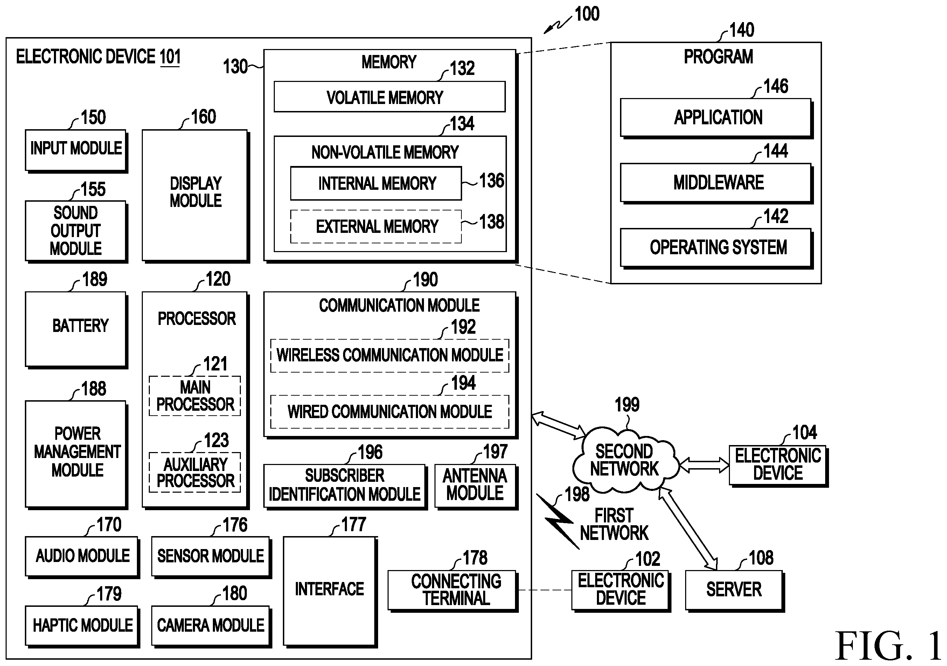

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

In a description for the configuration and the operation method of an electronic device, the term "virtual object" in the disclosure may be used to generally refer to an object indicating an execution screen of one or more applications displayed in a virtual reality space, an object included in the execution screen, an object related to a menu or function, an object for at least one input interface, or various other objects displayed. In addition, the virtual object described in the disclosure may refer to at least one of an object representing an execution screen of one or more applications displayed on a virtual reality space, an object included in an execution screen, an object related to a menu or a function, an object for at least one input interface, or various other objects displayed. Here, the object is described as a singular for the sake of descriptive convenience, and the singular form of the noun corresponding to the object may include one or more.

In the disclosure, the term "virtual reality space" may refer to a virtual space provided by using various virtual reality technology methods (e.g., eXtended Reality (XR), Virtual Reality (VR), or Augmented Reality (AR)) in a virtual environment.

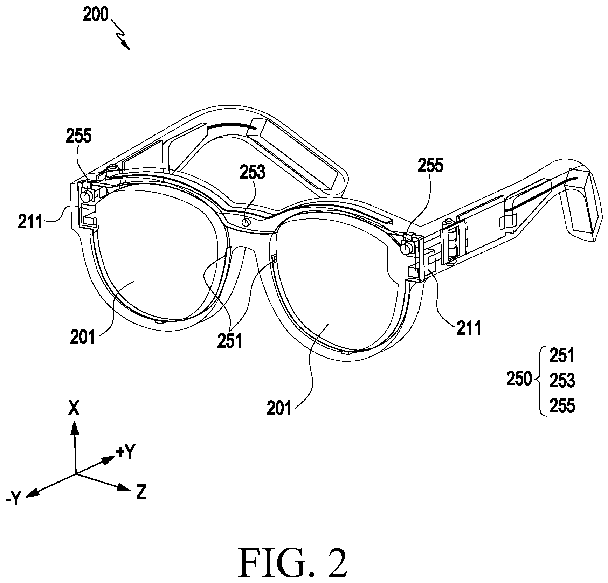

FIG. 2 is a diagram illustrating a configuration of a wearable electronic device according to an embodiment.

Referring to FIG. 2, the wearable electronic device 200 according to an embodiment of the disclosure may include at least one of a light output module 211, a display member 201, and a camera module 250.

According to an embodiment of the disclosure, the light output module 211 may include a light source capable of outputting an image and a lens configured to guide the image to the display member 201. According to an embodiment of the disclosure, the light output module 211 may include at least one of a liquid crystal display (LCD), a digital mirror device (DMD), a liquid crystal on silicon (LCoS), a light emitting diode (LED) on silicon (LEDoS), an organic light emitting diode (OLED), or a micro light emitting diode (micro LED).

According to an embodiment of the disclosure, the display member 201 may include an optical waveguide (e.g., a waveguide). According to an embodiment of the disclosure, an output image of the light output module 211 incident on one end of the optical waveguide may be propagated within the optical waveguide and provided to a user. According to an embodiment of the disclosure, the optical waveguide may include at least one of a diffraction element (e.g., a diffractive element (DOE) and a holographic optical element (HOE)) or a reflection element (e.g., a reflective mirror). For example, the optical waveguide may guide an output image of the light output module 211 to the user's eye by using at least one of a diffraction element or a reflection element.

According to an embodiment of the disclosure, the camera module 250 may capture a still image and/or video. According to an embodiment, the camera module 250 may be disposed within the lens frame and around the display member 201.

According to an embodiment of the disclosure, a first camera module 251 may capture and/or recognize the user's eye (e.g., a pupil or an iris) or a trajectory of a gaze. According to an embodiment of the disclosure, the first camera module 251 may periodically or aperiodically transmit information (e.g., trajectory information) on tracking of the user's eye and the trajectory of a gaze to the processor (e.g., the processor 120 in FIG. 1).

According to an embodiment of the disclosure, a second camera module 253 may capture an image of the outside.

According to an embodiment of the disclosure, a third camera module 255 may be used for hand detection and tracking and recognition of a user gesture (e.g., a hand gesture). The third camera module 255 according to an embodiment of the disclosure may be used for head tracking of 3 degrees of freedom (3DoF) and 6DoF, and location (space, environment) recognition and/or movement recognition. The second camera module 253 may be used for hand detection and tracking and user gesture recognition according to an embodiment of the disclosure. According to an embodiment of the disclosure, at least one of the first camera module 251 to the third camera module 255 may be replaced with a sensor module (e.g., a LiDAR sensor). For example, the sensor module may include at least one of a vertical cavity surface emitting laser (VCSEL), an infrared sensor, and/or a photodiode.

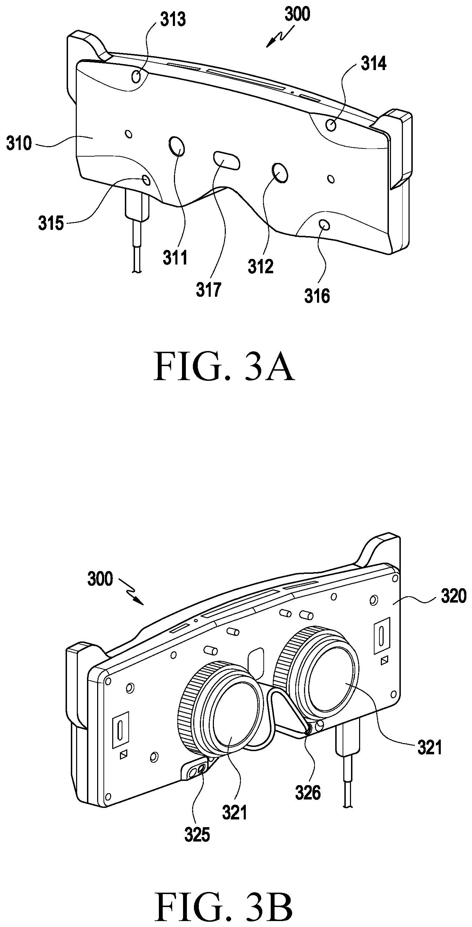

FIGS. 3A to 3C are diagrams illustrating a front surface and a rear surface of a wearable electronic device according to an embodiment.

Referring to FIGS. 3A and 3B, in an embodiment, a depth sensor 317 and/or camera modules 311, 312, 313, 314, 315, and 316 for acquiring information related to a peripheral environment of the wearable electronic device 300 may be arranged on a first surface 310 of a housing.

In an embodiment, the camera modules 311 and 312 may acquire an image related to a peripheral environment of the wearable electronic device.

In an embodiment, the camera modules 313, 314, 315, and 316 may acquire an image in a state where the wearable electronic device is worn by the user. The camera modules 313, 314, 315, and 316 may be used for hand detection and tracking and recognition of a user gesture (e.g., a hand gesture). The camera modules 313, 314, 315, and 316 may be used for head tracking of 3DoF and 6DoF, location (space, environment) recognition, and/or movement recognition. In an embodiment, the camera modules 311 and 312 may be used for hand detection and tracking and user gesture recognition.

In an embodiment, the depth sensor 317 may be configured to transmit a signal and receive a signal reflected from a subject and may be used to identify a distance to an object, such as time of flight (TOF). Additionally or in place of the depth sensor 317, the camera modules 313, 314, 315, and 316 may identify a distance to an object (or a subject).

According to an embodiment, face recognition camera modules 325 and 326 and/or a display 321 (and/or a lens) may be arranged on a second surface 320 of the housing.

In an embodiment, the face recognition camera modules 325 and 326 close to the display 321 may be used to recognize the user's face or may recognize and/or track both eyes of the user.

In an embodiment, the display 321 (and/or the lens) may be disposed on the second surface 320 of the wearable electronic device 300. In an embodiment, the wearable electronic device 300 may not include some camera modules 315 and 316 among a plurality of camera modules 313, 314, 315, and 316. Although not shown in FIGS. 3A and 3B, the wearable electronic device 300 may further include at least one of components shown in FIGS. 2A to 2C.

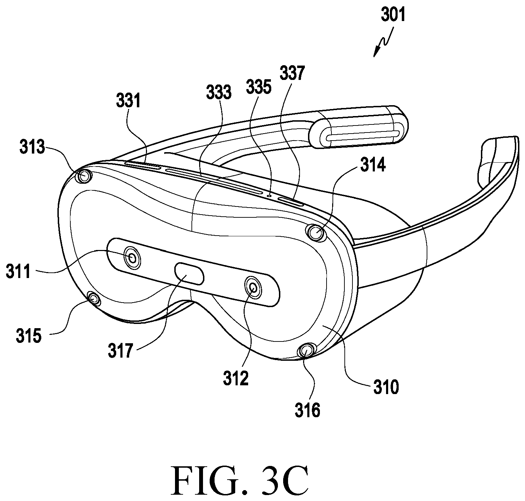

Referring to FIG. 3C, according to an embodiment, the wearable electronic device 301 may include a form factor (e.g., a head mounted display (HMD)) for being worn on the user's head. The wearable electronic device 301 may further include a strap and/or wearing member for securing the wearable electronic device onto a user's body part. The wearable electronic device 301 may include a volume button 331, a ventilation hole 333, a state indicator light 335, and a power button (e.g., including a fingerprint sensor) 337, and these components may also be similarly included in the wearable electronic device 300 illustrated in FIGS. 3A and 3B. The wearable electronic device 301 may provide a user experience (or content related to a user experience) based on augmented reality, virtual reality, and/or extended reality (or mixed reality) in a state in which the wearable electronic device is worn on the user's head. The wearable electronic device 301 configured in the form of an HMD may include components identical or similar to the components 310, 311, 312, 313, 314, 315, 316, and 317 in FIGS. 3A and 3B described above.

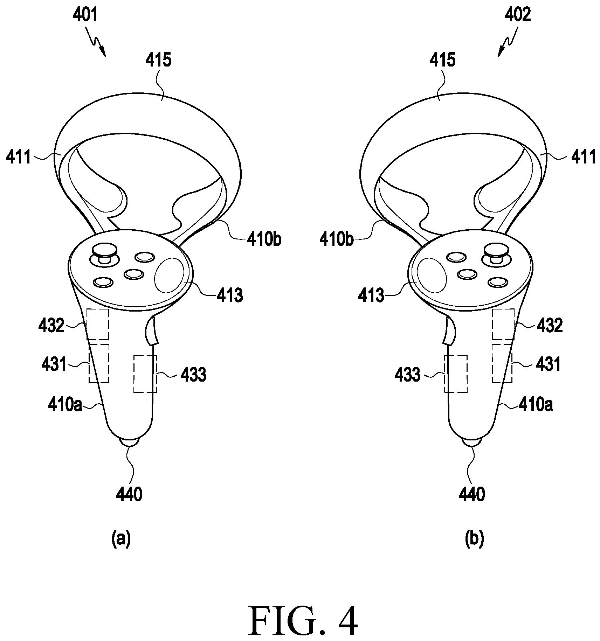

FIG. 4 is a diagram illustrating a configuration of an external electronic device according to an embodiment.

According to an embodiment, an electronic device (e.g., the electronic device 101 in FIG. 1, the wearable electronic device 200 in FIG. 2, and/or the wearable electronic device 300 or 301 in FIGS. 3A to 3C) that may provide a virtual reality space and/or a virtual reality object (or content) may be connected to at least one external electronic device (e.g., a controller) 401 and/or 402 that transmits and receives a control signal and information through a designated communication scheme (e.g., BLE communication).

Referring to FIG. 4, according to an embodiment, at least one of the external electronic device 401 and/or 402 may include an input interface device including a pointing device, an input controller, and/or a haptic motor (e.g., a vibration motor). At least one of the external electronic device 401 and/or 402 may transmit, to the electronic device 101 (or the wearable electronic device 200, 300, or 301, information regarding a user interaction with respect to a virtual object displayed in a virtual reality space). Without limitation thereto, the external electronic device 401 and/or 402 may be implemented as at least one of a keyboard, a mouse, an electronic pen, a smart phone, and an artificial intelligence (Al) device.

According to an embodiment, a first external electronic device 401 illustrated in part (a) in FIG. 4 may indicate a controller used by one hand of a user. A second external electronic device 402 illustrated in part (b) of FIG. 4B may indicate a controller used with the other hand of the user. The first external electronic device 401 and the second external electronic device 402 may be implemented to be the same or similar to each other, except for the difference in a housing structure corresponding to a hand.

The at least one external electronic device 401 and/or 402 according to an embodiment may include a sensor module 411, an input module 413, a battery (not shown), and a display member 415 (e.g., a state indicator light and/or an infrared LED). The at least one external electronic device 401 and/or 402 may further include other components necessary for other operations. The at least one external electronic device 401 and/or 402 may be configured to have a housing, wherein the entire housing is divided into a first housing area 410a and a second housing area 410b. For example, the first housing area 410a may have a sensor module 411, an input module 413, and a battery (not shown) disposed therein, and the second housing area 410b may have a display member 415 disposed therein. However, this is an example, and the components disposed in the first housing area 410a and the second housing area 410b may not be limited thereto. The sensor module 411 according to an embodiment may include at least one sensor 411 (e.g., a proximity sensor, a touch sensor, an acceleration sensor, and/or a gyro sensor) configured to detect a movement of at least one external electronic device 401 and/or 402. For example, the sensor module 411 may be disposed in the second housing area 410b. The input module 413 according to an embodiment may include at least one button for input regarding a user interaction with an object or a function executed on a virtual reality space displayed in an electronic device (e.g., the electronic device 101 or 200, or the wearable electronic device 200, 300, or 301) and the operation of the at least one external electronic device 401 and/or 402.

The at least one external electronic devices 401 and/or 402 according to an embodiment may further include a tip 440. The at least one external electronic device 401 and/or 402 may identify an input (e.g., a handwriting input) based on a pressure against the tip 440. For example, the tip 440 may be electrically connected to the sensor module 411, and the sensor module 411 may sense a pressure applied to the tip 440. Depending on the implementation, the at least one external electronic devices 401 and/or 402 may further include a separate sensor hub connected to the tip 440.

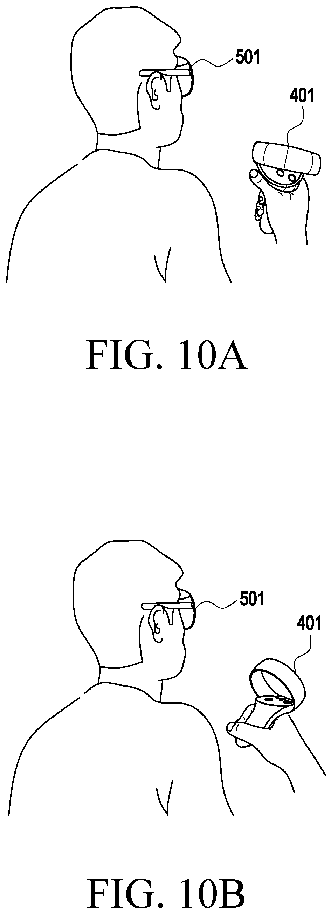

The at least one external electronic devices 401 and/or 402 according to an embodiment may further include a plurality of sensors 431, 432, and 433. The plurality of sensors 431, 432, and 433 may be sensors configured to identify a gripping posture of a user with respect to the at least one external electronic device 401 and/or 402. For example, the plurality of sensors 431, 432, and 433 may include a touch sensor and/or a capacitance change detection sensor. For example, the at least one external electronic device 401 and/or 402 may identify whether the user's gripping posture is a first posture (e.g., a gripping posture as in FIG. 10A) or a second posture (e.g., a gripping posture as in FIG. 10B) by using the plurality of sensors 431, 432, and 433. For example, the plurality of sensors 431, 432, and 433 may be disposed in a handle part of the at least one external electronic devices 401 and/or 402. The plurality of sensors 431, 432, and 433 may be arranged in different positions. The number and positions of the plurality of sensors 431, 432, and 433 illustrated in FIG. 4 are for illustrative purposes only, and the technical idea of the disclosure is not limited thereto. For example, the plurality of sensors may be appropriately arranged at appropriate positions in a suitable number to identify the user's gripping posture.

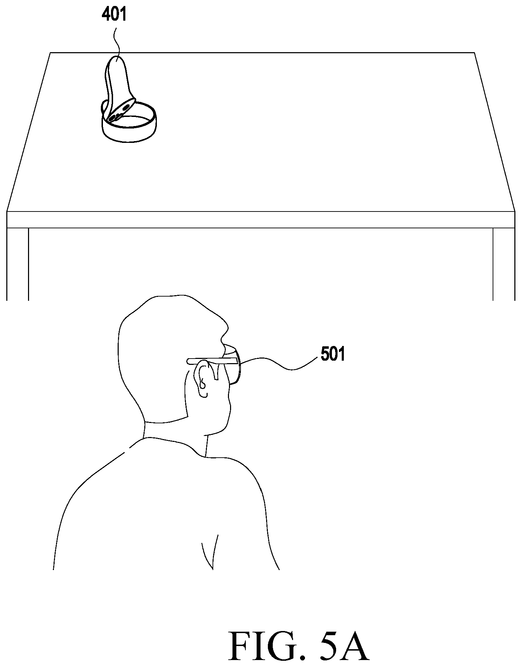

FIG. 5A is a diagram illustrating an electronic system including a wearable electronic device and an external electronic device according to an embodiment.

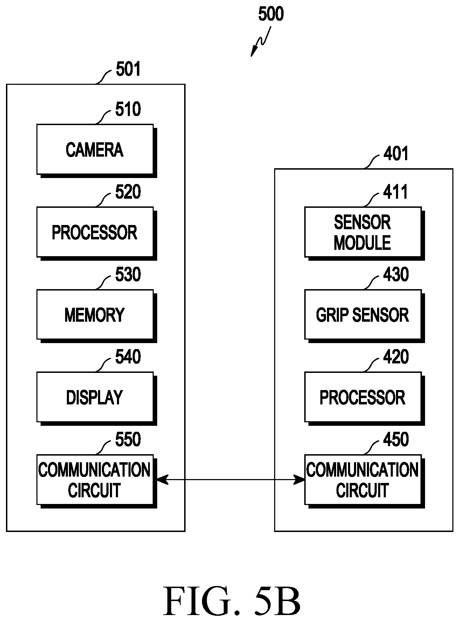

Referring to FIG. 5A, according to an embodiment, the electronic system (e.g., an electronic system 500 in FIG. 5B) may include a wearable electronic device 501 (e.g., the electronic device 101 or 200, or the wearable electronic device 200, 300, or 301) and a first external electronic device (e.g., a controller) 401 (or the second external electronic device 402 in FIG. 4).

According to an embodiment, the first external electronic device 401 may include an electronic device (e.g., a controller) configured to control an input of the wearable electronic device 501. For example, the first external electronic device 401 may include a pointing device or an input control device for the wearable electronic device 501. In addition, the number and/or type of the first external electronic device 401 is illustrative, and the technical idea of the disclosure is not limited thereto.

According to an embodiment, the wearable electronic device 501 may include an electronic device that may be worn by a user. For example, the wearable electronic device 501 may be implemented as one of augmented reality (AR) glass, a video see-through (VST) device, and a head mounted display (HMD) device. According to an embodiment, while the wearable electronic device 501 is being worn by the user, the wearable electronic device 501 may display a virtual object, virtual content, and/or a virtual execution screen through a display (e.g., the display 540 in FIG. 5). According to an embodiment, the wearable electronic device 501 may display a virtual object (e.g., a handwriting input), virtual content, and/or a virtual execution screen (e.g., an execution screen of an application) or control same according to a user input by the first external electronic device 401.

According to an embodiment, the wearable electronic device 501 may track a user's hand. A virtual object (e.g., a handwriting input), virtual content, and/or a virtual execution screen (e.g., an execution screen of an application) may be displayed or controlled according to a user input caused by a user's hand.

According to an embodiment, the wearable electronic device 501 may be operated in a hand tracking mode for tracking the user's hand. The wearable electronic device 501 may identify a user input, in the hand tracking mode, based on a gesture by the user's hand. When the wearable electronic device 501 is operated in the hand tracking mode, the external electronic device 401 may enter a deactivation state. For example, when the wearable electronic device 501 is operated in the hand tracking mode, the external electronic device 401 may be operated in a sleep mode or a standby mode.

According to an embodiment, the wearable electronic device 501 may be operated in a controller mode or a handwriting mode for identifying a user input by the first external electronic device 401. The wearable electronic device 501 may identify a user input, in the controller mode, based on a gesture caused by the first external electronic device 401. The wearable electronic device 501 may identify a handwriting input, in the handwriting mode, based on a handwriting input gesture caused by the first external electronic device 401. When the wearable electronic device 501 is operated in the controller mode or the handwriting mode, the wearable electronic device 501 may deactivate an operation of tracking a hand of the user.

According to a comparative example, in order for the wearable electronic device to perform switching from the hand tracking mode to the controller mode (or the handwriting mode), a separate input (e.g., an input for a button) for mode switching was required. In addition, the wearable electronic device may change a mode while the external electronic device is in a stationary state (or a standby state). Accordingly, the wearable electronic device was unable to rapidly change the mode. In addition, the wearable electronic device consumed a large amount of power to determine whether the external electronic device was in the stationary state (or standby state) for mode change.

According to an embodiment, the wearable electronic device 501 may rapidly change the mode. In addition, the wearable electronic device 501 may reduce power consumed for mode change by simplifying a preparation operation for mode change.

FIG. 5B is a block diagram illustrating an electronic system including a wearable electronic device and an external electronic device according to an embodiment.

Referring to FIG. 5B, according to an embodiment, the electronic system 500 may include a wearable electronic device 501 and a first external electronic device (e.g., a controller) 401. However, the number and/or type of the first external electronic device 401 is not limited thereto. For the descriptive convenience, the electronic system 500 will be described as including one first external electronic device 401 in the following. For example, the wearable electronic device 501 may be implemented as one of augmented reality (AR) glass, a video see-through (VST) device, and a head mounted display (HMD) device. For example, the first external electronic device 401 may be a pointing device or an input control device for the wearable electronic device 501. The first external electronic device 401 may be commonly referred to as an input device of augmented reality (AR) glass, a video see-through (VST) device, an extended reality (XR) device, or a head mounted display (HMD) device.

According to an embodiment, the wearable electronic device 501 may include a camera 510, a processor 520, memory 530, a display 540, and a communication circuit 550. According to an embodiment, the wearable electronic device 501 may be implemented to be the same as or similar to the electronic device 101 in FIG. 1, the wearable electronic device 200 in FIG. 2, or the wearable electronic device 300 or 301 in FIGS. 3A to 3C. For example, the wearable electronic device 501 may be configured to be worn on the user's head.

According to an embodiment, the processor 520 may control general operations of the wearable electronic device 501. By way of example, the processor 520 may be implemented identical or similar to the processor 120 in FIG. 1.

According to an embodiment, the processor 520 may operate the wearable electronic device 501 in a first mode related to an input method of the wearable electronic device 501. For example, the processor 520 may operate an input method of the wearable electronic device 501 in the first mode. For example, the first mode may indicate a mode of identifying or determining an input for the wearable electronic device 501, according to an input method that does not use the first external electronic device (e.g., a controller) 401. For example, the processor 520 may identify a gesture input by the user's body, a gaze tracking input (e.g., a user's pupil position sensed using a gaze tracking camera), a touch input for the wearable electronic device 501, or a combination of the above inputs as an input for the wearable electronic device 501 in the first mode of the wearable electronic device 501. For example, the first mode may include a hand tracking mode. The processor 520 may identify a user's hand movement or gesture through the camera 510 in the first mode, and identify a user input corresponding to the movement or gesture. For example, the processor 520 may compare a pre-stored reference movement or reference gesture in the memory 530 with the movement or gesture identified through the camera 510 to identify a user input.

According to an embodiment, the processor 510 may identify the first external electronic device (e.g., a controller) 401 configured to control an input of the wearable electronic device 501 through the camera 510 and/or the communication circuit 550 while the wearable electronic device 501 (or the input method of the wearable electronic device 501) is being operated in the first mode. For example, if the first external electronic device 401 is located within the field of view (FOV) of the camera 510, the processor 510 may identify the first external electronic device 401 by using the camera 510. For example, the camera 510 may include a depth sensor, a time-of-flight (ToF) sensor, and/or a depth vision camera. Alternatively, the processor 510 may identify the first external electronic device 401 near the wearable electronic device 501, based on a signal received from the communication circuit 550.

According to an embodiment, the processor 510, based on identifying the first external electronic device 401 by using the camera 510, may receive, through the communication circuit 550, information on a user's gripping posture, which is identified by the grip sensor 430 (e.g., a plurality of sensors (e.g., the plurality of sensors 431, 432, and 433 in FIG. 4) disposed on a handle portion of the first external electronic device 401). For example, the grip sensor 430 may detect a user's touch or capacitance change with respect to a handle part of the first external electronic device 401. For example, the grip sensor 430 may include a plurality of sensors 431, 432, and 433 disposed in different positions. By way of example, the processor 510 may receive first information for at least one sensor that has sensed a user's grip on the first external electronic device 401, among the plurality of sensors 431, 432, and 433. For example, the first information may include information regarding at least one sensor that has detected a change in capacitance among the plurality of sensors 431, 432, and 433. For example, the first information may include information indicating which of the plurality of sensors 431, 432, and 433 has detected the capacitance change (e.g., a touch by the user's grip). In this case, the processor 520 may identify a user's gripping posture (e.g., a first posture or a second posture) with regard to the first external electronic device 401 by identifying which of the plurality of sensors 431, 432, and 433 has detected the capacitance change. Alternatively, the first information may include information indicating a gripping posture (e.g., the first posture or the second posture) of the user. In this case, the processor 520 may identify a user's gripping posture (e.g., the first posture or the second posture) indicated by the first information. For example, the first posture may indicate a posture in which the user grips the first external electronic device 401 with the palm and the fingers, as illustrated in FIG. 10A. For example, the second posture may indicate a posture in which the user grips the handle of the first external electronic device 401 with the fingers as if holding a pencil, as illustrated in FIG. 10B.

According to an embodiment, the processor 520 may change the first mode to a mode (or second mode) corresponding to the at least one sensor, among a plurality of modes for controlling the input of the wearable electronic device 401, by using the first external electronic device 401, based on the first information received from the first external electronic device 401. For example, the plurality of modes may include a controller mode and a handwriting mode. The processor 520 may change the first mode to a mode (e.g., the controller mode or the handwriting mode) designated for at least one sensor. Alternatively, the processor 520 may maintain the first mode.

According to an embodiment, the processor 520 may change the first mode to the controller mode if a first sensor 431 corresponding to a first position and a second sensor 432 corresponding to a second position, among the plurality of sensors 431, 432, and 433 in FIG. 4, are identified as having sensed the user's grip.

According to an embodiment, while the processor 520 is operating in the controller mode, the processor 520 may deactivate elements (e.g., a specific button, a pressure sensor (or a pen pressure sensor), and an IR LED) included in the first external electronic device 401 and irrelevant to the controller mode.

According to an embodiment, the processor 520 may change the first mode to the handwriting mode if the first sensor 431 corresponding to the first position and a third sensor 432 corresponding to a third position, among the plurality of sensors 431, 433, and 433 in FIG. 4, are identified as having sensed the user's grip.

According to an embodiment, the processor 520 may receive, after the first external electronic device 401 is switched to the handwriting mode, information on pressure (e.g., information on a pen pressure) against the tip 440 included in the first external electronic device 401, through the communication circuit 550. The processor 520 may identify an execution command for a handwriting input or a function related to the handwriting input, based on the information on the pressure.

According to an embodiment, while the processor 520 is operating in the handwriting mode, the processor 520 may deactivate elements (e.g., a specific button and an IR LED) included in the first external electronic device 401 and irrelevant to the handwriting mode.

According to an embodiment, the processor 520 may change the first mode to a mode (e.g., the controller mode or the handwriting mode) designated for the gripping posture, if information on the gripping posture sensed by the grip sensor 430 is received from the first external electronic device 401 even when the first external electronic device 401 is not identified through the camera 510. For example, when the processor 520 receives information indicating that the first sensor 431 corresponding to the first position and the second sensor 432 corresponding to the second position, among the plurality of sensors 431, 432, and 433 in FIG. 4, have sensed a user's grip, the processor 520 may change the first mode to the controller mode. Alternatively, the processor 520 may change the first mode to the handwriting mode when the information indicating that the first sensor 431 corresponding to the first position and the third sensor 433 corresponding to the third position, among the plurality of sensors 431, 432, and 433 in FIG. 4, have sensed the user's grip is received.

According to an embodiment, the processor 520 may, after changing the first mode to the controller mode or the handwriting mode, identify whether at least one sensor designated for the corresponding mode senses a grip of the user through the first external electronic device 401. If the at least one sensor is identified to have been continuously sensing the user's grip, the processor 520 may maintain the controller mode or the handwriting mode. Alternatively, when the at least one sensor is identified not to sense a user's grip, the processor 520 may change the controller mode or the handwriting mode back to the first mode. Depending on the implementation, the processor 520 may change the controller mode to the handwriting mode or the handwriting mode to the controller mode, based on the information on the grip sensor 430 received through the first external electronic device 401.

According to an embodiment, the processor 520 may display virtual content or an object through the display 540. For example, when the wearable electronic device 501 is implemented as AR glass, the display 540 may be implemented as an optical output device (e.g., the display member 201 in FIG. 2) for displaying content or objects through the glass. Alternatively, if the wearable electronic device 501 is implemented as a VST device or HMD device, the display 540 may be implemented as a device (e.g., the display 321 in FIG. 3A or 3B) for displaying a screen on the display. In this case, the wearable electronic device 501 may display a virtual object on a screen captured through the camera 510.

According to an embodiment, the processor 520 may transmit and receive information (or data) to and from the first external electronic device 401 wirelessly through the communication circuit 550. The processor 520 may establish a communication connection with the first external electronic device 401 through the communication circuit 550 by using a short-range communication technology (e.g., Bluetooth low energy (BLE) or WiFi).

According to an embodiment, the first external electronic device 401 may include a sensor module 411, a processor 420, a grip sensor 430, and a communication circuit 450.

According to an embodiment, the processor 420 may control the overall operation of the first external electronic device 401. By way of example, the processor 420 may be implemented identical or similar to the processor 120 in FIG. 1.

According to an embodiment, the processor 420 may identify information on a movement or a gesture of the first external electronic device 401 sensed through the sensor module 411 (e.g., a motion sensor, an acceleration sensor, and/or a gyro sensor).

According to an embodiment, the processor 420 may identify information on a user's gripping posture (or gripping position) with respect to the first external electronic device 401, which is sensed through the grip sensor 430 (e.g., a touch sensor and/or a capacitance change detection sensor). Alternatively, the processor 420 may identify at least one sensor having detected a user's grip, among the plurality of sensors 431, 432, and 433.

According to an embodiment, the first external electronic device 401 may further include a pressure sensor (or a pen pressure sensor) (not illustrated). For example, the processor 420 may identify information regarding a pressure for a tip (e.g., the tip 440 in FIG. 4) included in the first external electronic device 401, which is sensed through a pressure sensor.

According to an embodiment, the processor 420 may transmit, through the communication circuit 450, information on the movement or gesture, information on the gripping posture (or the gripped position), information on the at least one sensor that has detected the user's grip, and/or information on the pressure, to the wearable electronic device 501. For example, the communication circuit 450 may establish a communication connection with the wearable electronic device 401 by using a short-range communication technology.

According to an embodiment, the processor 420 may be operated in the sleep mode or the standby mode in a state of having no movement. The processor 420 may deactivate some of elements (e.g., an IR LED, a pressure sensor, and/or a specific button) of the first external electronic device 401 when the processor 420 is operated in the sleep mode or the standby mode. Alternatively, when the wearable electronic device 501 is operated in the controller mode or the handwriting mode, the processor 420 may deactivate some elements (e.g., an IR LED, a pressure sensor, and/or a specific button) of the first external electronic device 401, which are irrelevant to the corresponding mode.

At least some of the operations of the wearable electronic device 501 described below may be performed by the processor 520. However, for the descriptive convenience, the operations will be described as being performed by the wearable electronic device 501.

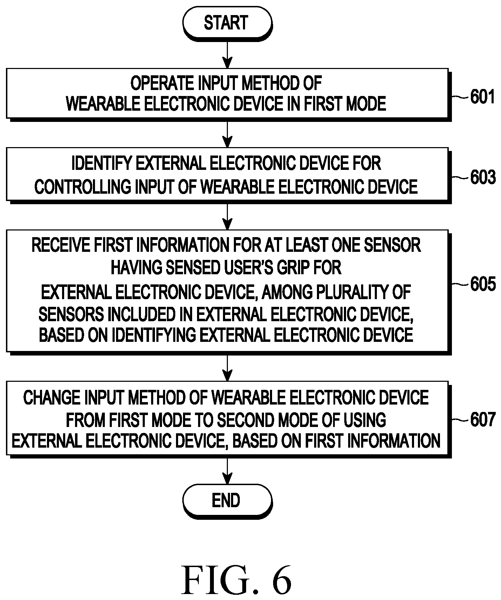

FIG. 6 is a flowchart illustrating an operation of a wearable electronic device according to an embodiment.

Referring to FIG. 6, according to an embodiment, in operation 601, the wearable electronic device 501 may operate an input method of the wearable electronic device 501 in a first mode that does not use a first external electronic device (e.g., a controller) 401. For example, the wearable electronic device 501 may be operated in the first mode (e.g., a user gesture input mode or a hand tracking mode for tracking a user's hand) related to the input method of the wearable electronic device 501 without using the first external electronic device 401.

According to an embodiment, in operation 603, the wearable electronic device 501 may identify an external electronic device (e.g., the first external electronic device 401 in FIG. 5) configured to control an input of the wearable electronic device 501 through at least one of a camera (e.g., the camera 510 in FIG. 5) and/or a communication circuit (e.g., the communication circuit 550 in FIG. 5). Alternatively, the wearable electronic device 501 may identify the first external electronic device 401 through a sensor included in the wearable electronic device 501 while operating in the first mode.

According to an embodiment, in operation 605, the wearable electronic device 501 may receive first information for at least one sensor that has sensed a grip of the user for the external electronic device 401, among a plurality of sensors (e.g., 431, 432, and 433 in FIG. 4) included in the external electronic device 401, based on identifying the external electronic device 401 (e.g., identifying the external electronic device 401 through the camera 510 and/or the communication circuit 550). Alternatively, the wearable electronic device 501 may, when the external electronic device 401 is identified through the camera 510, receive, from the external electronic device 401, information related to the user's gripping posture.

According to an embodiment, in operation 607, the wearable electronic device 501 may change a first mode (e.g., a user gesture input mode or a hand tracking mode) to a second mode (e.g., a controller mode or a handwriting mode) for controlling an input of the wearable electronic device 501 by using the external electronic device 401, based on the first information. For example, the wearable electronic device 501 may change to the second mode designated for (or corresponding to) the user's grip or at least one sensor among a plurality of modes (e.g., the controller mode and the handwriting mode) using the external electronic device 401, based on at least one sensor or the user's gripping posture (e.g., the gripping posture corresponding to at least one sensor) identified based on first information.

According to the method described above, the wearable electronic device 501 may change the mode quickly. In addition, the wearable electronic device 501 may reduce power consumption caused by mode switching.

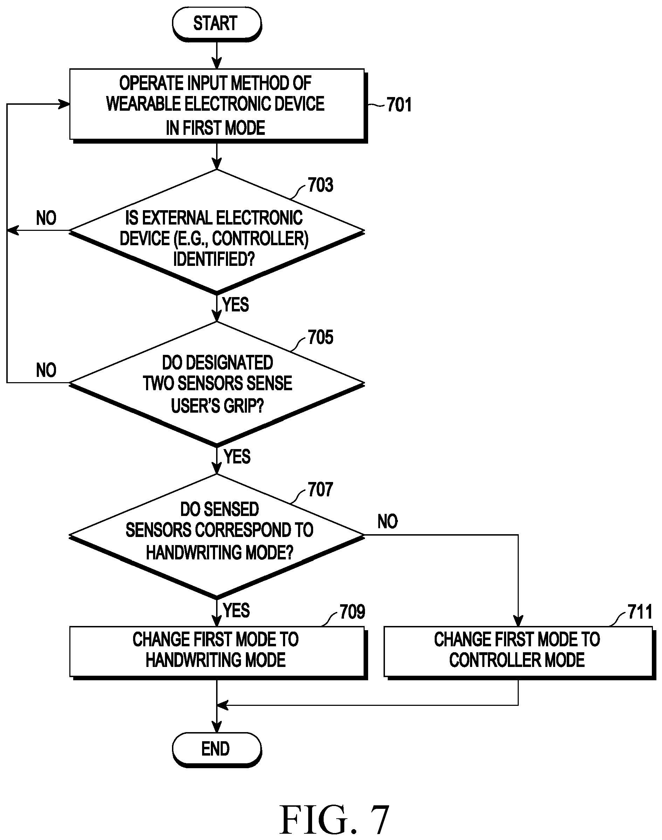

FIG. 7 is a flowchart illustrating an operation in which a wearable electronic device changes a mode related to a user input from a first mode to a second mode according to an embodiment.

Referring to FIG. 7, according to an embodiment, in operation 701, the wearable electronic device 501 may be operated in a first mode (e.g., the gesture input mode or the hand tracking mode) that does not use the first external electronic device (e.g., a controller) 401 as an input method of the wearable electronic device 501. For example, the wearable electronic device 501 may track a user's hand by using a camera (e.g., the camera 510 in FIG. 5) in the first mode. In addition, the wearable electronic device 501 may identify a movement or gesture of a user's hand in the first mode, and identify a user input corresponding to the identified movement or gesture.

According to an embodiment, in operation 703, the wearable electronic device 501 may determine whether the external electronic device (e.g., the first external electronic device 401 or a controller in FIG. 5) is identified (or confirmed) through at least one of the camera 501 or the communication circuit (e.g., the communication circuit 550 in FIG. 5) while operating in the first mode. Alternatively, the wearable electronic device 501 may identify the first external electronic device 401 through a sensor included in the wearable electronic device 501 while operating in the first mode.

According to an embodiment, if the external electronic device 401 is not identified (No in operation 703), the wearable electronic device 501 may be operated in the first mode.

According to an embodiment, if the external electronic device 401 is not identified (YES in operation 703), in operation 705, the wearable electronic device 501 may identify whether two designated sensors among the plurality of sensors (e.g., 431, 432, and 433 in FIG. 4) included in the external electronic device 401 sense a user's grip. For example, the wearable electronic device 501 may receive related information from the external electronic device 401 to identify whether the designated two sensors sense the user's grip. For example, the designated two sensors may represent a pre-designated sensor in the external electronic device 401, so as to switch the wearable electronic device 501 to the controller mode or the handwriting mode.

According to an embodiment, if two designated sensors included in the external electronic device 401 are identified not to have sensed the user's grip (NO in operation 705), the wearable electronic device 501 may be operated in the first mode.

According to an embodiment, if two designated sensors included in the external electronic device 401 are identified to have sensed a user's grip (YES in operation 705), in operation 707, the wearable electronic device 501 may identify whether the sensed sensors correspond to the handwriting mode.

According to an embodiment, if the sensed sensors are identified to correspond to the handwriting mode (YES in operation 707), in operation 709, the wearable electronic device 501 may change the first mode to the handwriting mode.

According to an embodiment, when the sensed sensors are identified not to correspond to the handwriting mode (NO in operation 707), in operation 711, the wearable electronic device 501 may change the first mode to the controller mode.

According to the method described above, the wearable electronic device 501 may change the mode quickly. In addition, the wearable electronic device 501 may reduce power consumption caused by mode switching.

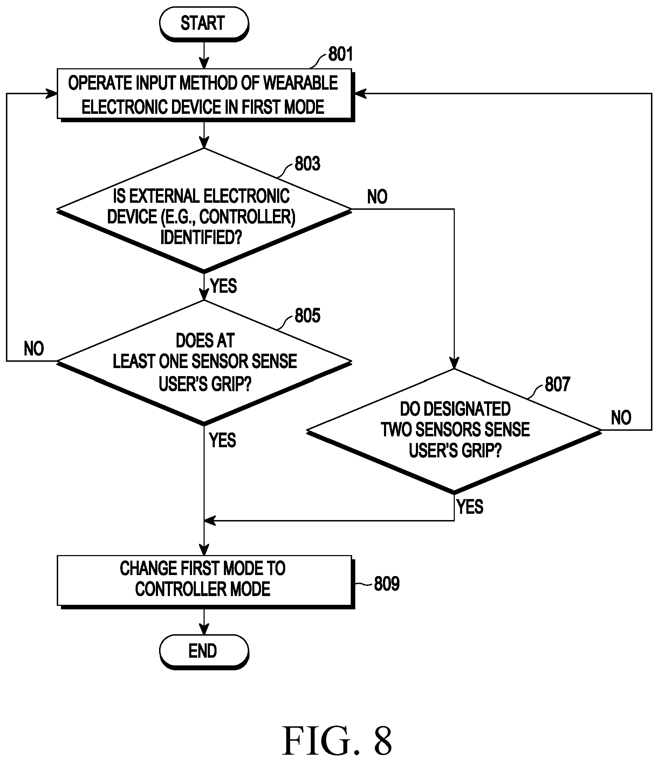

FIG. 8 is a flowchart illustrating an operation in which a wearable electronic device changes a mode related to a user input from a first mode to a second mode according to an embodiment.

Referring to FIG. 8, according to an embodiment, in operation 801, the wearable electronic device 501 may be operated in a first mode (e.g., the gesture input mode or the hand tracking mode) that does not use the first external electronic device (e.g., a controller) 401 as an input method of the wearable electronic device 501. For example, the wearable electronic device 501 may track a user's hand by using a camera (e.g., the camera 510 in FIG. 5) in the first mode. In addition, the wearable electronic device 501 may identify a movement or gesture of a user's hand in the first mode, and identify a user input corresponding to the identified movement or gesture.

According to an embodiment, in operation 803, the wearable electronic device 501 may determine whether the external electronic device (e.g., the first external electronic device 401 or a controller in FIG. 5) is identified (or confirmed) through at least one of the camera 510 or the communication circuit (e.g., the communication circuit 550 in FIG. 5) while operating in the first mode. Alternatively, the wearable electronic device 501 may identify the first external electronic device 401 through a sensor included in the wearable electronic device 501 while operating in the first mode.

According to an embodiment, when the external electronic device 401 is identified (YES in operation 803), in operation 805, the wearable electronic device 501 may identify whether at least one sensor is sensing a user's grip. Here, the at least one sensor may include a sensor (or a combination of sensors) that is not designated in a specific mode. In other words, identifying whether at least one sensor senses the user's grip may be for identifying the presence or absence of the grip.

According to an embodiment, if it is identified that the at least one sensor does not sense a user's grip (NO in operation 805), the wearable electronic device 501 may maintain the first mode.

According to an embodiment, if it is identified that at least one sensor has sensed a user's grip (YES in operation 805), the wearable electronic device 501 may change the first mode to the controller mode. According to an implementation, the wearable electronic device 501 may change the first mode to the handwriting mode. For example, changing the first mode to the controller mode or the handwriting mode may be designated by the user or automatically designated by the processor 520.

According to an embodiment, when the external electronic device 401 is not identified (NO in operation 803), in operation 807, the wearable electronic device 501 may identify whether two sensors designated to a specific mode sense a user's grip.

According to an embodiment, if it is identified that the designated two sensors do not sense a user's grip (NO in operation 807), the wearable electronic device 501 may maintain the first mode.

According to an embodiment, if it is identified that the designated two sensors have sensed a user's grip (YES in operation 807), the wearable electronic device 501 may change the first mode to a mode (e.g., the controller mode) corresponding to the two designated sensors. According to an implementation, the wearable electronic device 501 may change the first mode to the handwriting mode.

According to the above-described method, the wearable electronic device 501 may differently configure mode change conditions, in a case where the external electronic device 401 is identified through the camera 510 and in a case where the external electronic device 401 is not identified. As such, the wearable electronic device 501 may quickly change the mode. In addition, the wearable electronic device 501 may simplify operations for mode switching, so as to reduce power consumption due to mode switching.

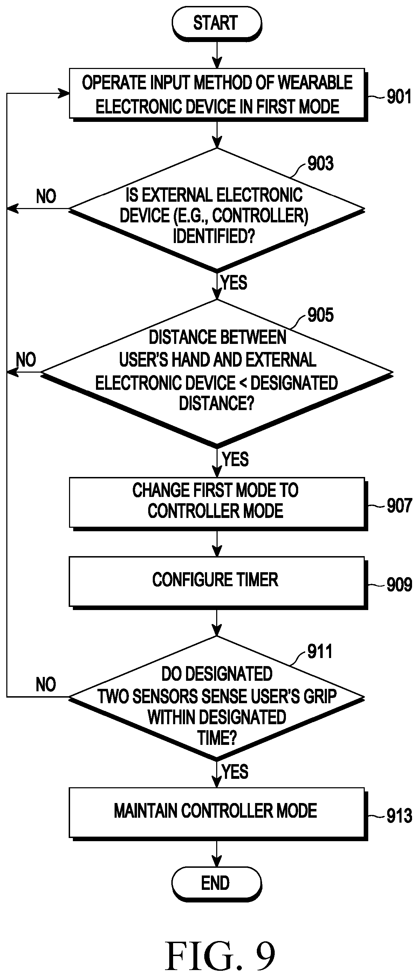

FIG. 9 is a flowchart illustrating an operation in which a wearable electronic device changes a mode related to a user input from a first mode to a second mode according to an embodiment.

Referring to FIG. 9, according to an embodiment, in operation 901, the wearable electronic device 501 may be operated in a first mode (e.g., the gesture input mode or the hand tracking mode) that does not use the first external electronic device (e.g., a controller) 401 as an input method of the wearable electronic device 501. For example, the wearable electronic device 501 may track a user's hand by using a camera (e.g., the camera 510 in FIG. 5) in the first mode. The wearable electronic device 501 may identify a movement or gesture of a user's hand in the first mode, and identify a user input corresponding to the identified movement or gesture.

According to an embodiment, in operation 903, the wearable electronic device 501 may determine whether the external electronic device (e.g., the first external electronic device 401 or a controller in FIG. 5) is identified (or confirmed) through at least one of the camera 510 or the communication circuit (e.g., the communication circuit 550 in FIG. 5) while operating in the first mode. Alternatively, the wearable electronic device 501 may identify the first external electronic device 401 through a sensor included in the wearable electronic device 501 while operating in the first mode.

According to an embodiment, if the external electronic device 401 is not identified (No in operation 903), the wearable electronic device 501 may maintain the first mode.

According to an embodiment, when the external electronic device 401 is identified (YES in operation 903), in operation 905, the wearable electronic device 501 may identify whether a distance between the user's hand and the external electronic device 401 is shorter than a designated distance. For example, the designated distance for mode switching of the wearable electronic device 401 may be determined as a distance (e.g., 10 cm) indicating that a user's hand is near the external electronic device 401. The designated distance may be determined by the user or automatically determined by the processor 520.

According to an embodiment, if it is identified that the distance between the user's hand and the external electronic device 401 is not shorter than the designated distance (NO in operation 905), the wearable electronic device 501 may maintain the first mode.

According to an embodiment, if it is identified that the distance between the user's hand and the external electronic device 401 is shorter than the designated distance (YES in operation 905), in operation 907, the wearable electronic device 501 may change the first mode to the controller mode. According to an implementation, the wearable electronic device 501 may change the first mode to the handwriting mode. For example, changing the first mode to the controller mode or the handwriting mode may be designated by the user or automatically designated by the processor 520.

Depending on the implementation, in case that the condition of operation 903 is satisfied, the wearable electronic device 501 may perform operation 907, skipping operation 905.

According to an embodiment, in operation 909, the wearable electronic device 501 may change the first mode to the controller mode (or the handwriting mode) and then activate a timer (or a timer configuration).

According to an embodiment, in operation 911, the wearable electronic device 501 may identify whether the two designated sensors included in the external electronic device 401 sense the user's grip within a designated time through the external electronic device 401.

According to an embodiment, if it is identified that the two designated sensors included in the external electronic device 401 have sensed the user's grip within the designated time (YES in operation 911), in operation 913, the wearable electronic device 501 may maintain the controller mode (or the handwriting mode).

According to an embodiment, if it is not identified that the two designated sensors included in the external electronic device 401 have sensed the user's grip within the designated time (NO in operation 911), the wearable electronic device 501 may change the controller mode (or the handwriting mode) to the first mode. That is, if it is not identified that the two designated sensors included in the external electronic device 401 have sensed the user's grip within the designated time, the wearable electronic device 501 may cancel the mode change.

According to the above-described method, in case that a designated condition among the conditions for mode change is satisfied, the wearable electronic device 501 may preemptively change the mode. As such, the wearable electronic device 501 may quickly change the mode. In addition, the wearable electronic device 501 may simplify operations for mode switching, so as to reduce power consumption due to mode switching.

FIGS. 10A and 10B are diagrams illustrating a mode of a wearable electronic device determined according to a user's gripping posture for an external electronic device according to an embodiment.

Referring to FIG. 10A, according to an embodiment, a user may grip the external electronic device 401 in a first posture. As the user grips the external electronic device 401 in the first posture, a first sensor 431 and a second sensor 432 among a plurality of sensors (e.g., 431, 432, and 433 in FIG. 4) included in the external electronic device 401 may detect a touch (or a capacitance change). The external electronic device 401 may transmit, to the wearable electronic device 501, information on the first posture or information indicating that the first sensor 431 and the second sensor 432 have detected a touch (or a change in capacitance).

According to an embodiment, the wearable electronic device 501 may change or switch the first mode to the controller mode in response to information on the first posture or information indicating that the first sensor 431 and the second sensor 432 have detected a touch (or a change in capacitance).

Referring to FIG. 10A, according to an embodiment, the user may grip the external electronic device 401 in a second posture. As the user grips the external electronic device 401 in the second posture, the first sensor 431 and a third sensor 432 among a plurality of sensors (e.g., 431, 433, and 433 in FIG. 4) included in the external electronic device 401 may detect a touch (or a capacitance change). The external electronic device 401 may transmit, to the wearable electronic device 501, information on the second posture or information indicating that the first sensor 431 and the third sensor 433 have detected a touch (or a change in capacitance).

According to an embodiment, the wearable electronic device 501 may change or switch the first mode to the handwriting mode in response to information on the second posture or information indicating that the first sensor 431 and the third sensor 432 have detected a touch (or a change in capacitance).

According to the method described above, the wearable electronic device 501 may change the mode quickly. In addition, the wearable electronic device 501 may simplify operations for mode switching, so as to reduce power consumption due to mode switching.

The wearable electronic device 501 configured to be worn on the head according to an embodiment may include a camera 510, a communication circuit 550, at least one processor 520, and memory 530 storing instructions. According to an embodiment, the instructions may be configured to, when executed by the at least one processor, cause the wearable electronic device to identify an external electronic device 401 and/or 402 for controlling an input of the wearable electronic device, while an input method of the wearable electronic device is operating in a first mode. According to an embodiment, the instructions may be configured to, when executed by the at least one processor, cause the wearable electronic device to receive first information for at least one sensor that has sensed a touch by a user's grip on the external electronic device among a plurality of sensors 431, 432, and 433 included in the external electronic device, through the communication circuit based on identifying the external electronic device. According to an embodiment, the instructions may be configured to, when executed by the at least one processor, cause the wearable electronic device to change an input method of the wearable electronic device from the first mode to a second mode corresponding to the at least one sensor, among a plurality of modes utilizing the external electronic device, based on the first information.

The instructions may be configured to, when executed by the at least one processor, cause the wearable electronic device to change the first mode to a controller mode for identifying a user input for the wearable electronic device by using the external electronic device, when a first sensor corresponding to a first position and a second sensor corresponding to a second position, among the plurality of sensors included in the external electronic device, are identified to have sensed the touch by the grip.

According to an embodiment, the instructions may be configured to, when executed by the at least one processor, cause the wearable electronic device to deactivate elements included in the external electronic device that are unrelated to the controller mode while operating the input method of the wearable electronic device in the controller mode.

The instructions may be configured to, when executed by the at least one processor, cause the wearable electronic device to, if the first information indicating that the first sensor corresponding to the first position and the second sensor corresponding to the second position among the plurality of sensors have sensed the touch by the grip has been received from the external electronic device, even when the external electronic device is not identified, change the first mode to the controller mode for identifying a user input for the wearable electronic device by using the external electronic device.

The instructions may be configured to, when executed by the at least one processor, cause the wearable electronic device to change the first mode to a handwriting mode for inputting a handwriting by using the external electronic device, if the first sensor corresponding to the first location and a third sensor corresponding to a third location among the plurality of sensors included in the external electronic device are identified to have sensed the touch by the grip.

According to an embodiment, the instructions may be configured to, when executed by the at least one processor, cause the wearable electronic device to, after changing the input method of the wearable electronic device to the handwriting mode, receive, through the communication circuit, information regarding a pressure on the tip included in the external electronic device. According to an embodiment, the instructions may be configured to, when executed by the at least one processor, cause the wearable electronic device to identify a handwriting input, based on the information on the pressure.

According to an embodiment, the instructions may be configured to, when executed by the at least one processor, cause the wearable electronic device to deactivate elements included in the external electronic device that are unrelated to the handwriting mode while operating the input method of the wearable electronic device in the handwriting mode.

The instructions may be configured to, when executed by the at least one processor, cause the wearable electronic device to, if the first information indicating that the first sensor corresponding to the first position and the third sensor corresponding to the third position among the plurality of sensors have sensed the touch by the grip has been received from the external electronic device, even when the external electronic device is not identified, change the first mode to the handwriting mode for inputting a handwriting by using the external electronic device.

The plurality of sensors included in the external electronic device according to an embodiment may be disposed in a handle part of the external electronic device, and the plurality of sensors included in the external electronic device may be disposed at different positions.

According to an embodiment, the instructions may be configured to, when executed by the at least one processor, cause the wearable electronic device to, after the input method of the wearable electronic device has been changed to the second mode, identify whether the at least one sensor senses the touch by the grip through the external electronic device. According to an embodiment, the instructions may be configured to, when executed by the at least one processor, cause the wearable electronic device to maintain the second mode, when it is identified that the at least one sensor has sensed the touch by the grip. According to an embodiment, the processor may be configured to change the second mode to the first mode when it is identified that the at least one sensor does not sense the touch by the grip.

According to an embodiment, an operating method of a wearable electronic device 501 configured to be wearable on a head may include an operation of identifying an external electronic device 401 and/or 402 for controlling an input of the wearable electronic device while an input method of the wearable electronic device is operating in a first mode. According to an embodiment, the operating method of the wearable electronic device may include an operation of receiving first information for at least one sensor that has sensed a touch by a user's grip on the external electronic device among a plurality of sensors 431, 432, and 433 included in the external electronic device, based on identifying the external electronic device. According to an embodiment, the operating method of the wearable electronic device may include an operation of changing an input method of the wearable electronic device from the first mode to a second mode corresponding to the at least one sensor, among a plurality of modes utilizing the external electronic device, based on the first information.

According to an embodiment, the operation of changing the first mode to the second mode may include an operation of changing the first mode to a controller mode for identifying a user input for the wearable electronic device by using the external electronic device, when a first sensor corresponding to a first position and a second sensor corresponding to a second position, among the plurality of sensors included in the external electronic device, are identified to have sensed the touch by the grip.

According to an embodiment, the operating method of the wearable electronic device may further include an operation of deactivating elements included in the external electronic device and unrelated to the controller mode while operating the input method of the wearable electronic device in the controller mode.

According to an embodiment, the operating method of the wearable electronic device may further include, when receiving, from the external electronic device, the first information indicating that the first sensor corresponding to the first position and the second sensor corresponding to the second position among the plurality of sensors have sensed the touch by the user's grip even if the external electronic device has not been identified, an operation of changing the first mode to a controller mode for identifying a user input for the wearable electronic device by using the external electronic device.

According to an embodiment, the operation of changing the first mode to the second mode may include an operation of changing the first mode to a handwriting mode for inputting a handwriting by using the external electronic device, if the first sensor corresponding to the first location and a third sensor corresponding to a third location among the plurality of sensors included in the external electronic device are identified to have sensed the touch by the grip.

According to an embodiment, the operating method of the wearable electronic device may further include, after changing the input method of the wearable electronic device to the handwriting mode, an operation of receiving, through a communication circuit 550 included in the wearable electronic device, information on a pressure of a tip included in the external electronic device. According to an embodiment, the operating method of the wearable electronic device may further include an operation of identifying a handwriting input, based on the information regarding the pressure.

According to an embodiment, the operating method of the wearable electronic device may further include an operation of deactivating elements included in the external electronic device and unrelated to the handwriting mode while operating the input method of the wearable electronic device in the handwriting mode.

According to an embodiment, the operating method of the wearable electronic device may further include, when receiving, from the external electronic device, the first information indicating that the first sensor corresponding to the first position and the third sensor corresponding to the third position among the plurality of sensors have sensed the touch by the user's grip even if the external electronic device has not been identified, an operation of changing the first mode to the handwriting mode for inputting a handwriting by using the external electronic device

The wearable electronic device 501 configured to be worn on the head according to an embodiment may include a camera 510, a communication circuit 550, at least one processor 520, and memory 530 storing instructions. According to an embodiment, the instructions may be configured to, when executed by the at least one processor, cause the wearable electronic device to identify an external electronic device for controlling an input of the wearable electronic device, while an input method of the wearable electronic device is operating in a first mode. According to an embodiment, the instructions may be configured to, when executed by the at least one processor, cause the wearable electronic device to change, based on identifying the external electronic device, an input method of the wearable electronic device from the first mode to a second mode using the external electronic device. According to an embodiment, the instructions may be configured to, when executed by the at least one processor, cause the wearable electronic device to maintain the second mode, if first information for at least one sensor that has sensed a touch by a user's grip on the external electronic device among a plurality of sensors 431, 432, and 433 included in the external electronic device is received, through the communication circuit, within a designated time. According to an embodiment, the instructions may be configured to, when executed by the at least one processor, cause the wearable electronic device to change the second mode to the first mode, if the first information for at least one sensor that has sensed the touch by the user's grip on the external electronic device among the plurality of sensors included in the external electronic device is not received, through the communication circuit, within a designated time.

According to an embodiment, the instructions may be configured to, when executed by the at least one processor, cause the wearable electronic device to change the first mode to the second mode if it is identified that the external electronic device is located within a predetermined distance from the wearable electronic device.

The technical task to be achieved in the disclosure is not limited to the technical task mentioned above, and other technical tasks which are not mentioned herein may be clearly understood by those skilled in the art to which the disclosure pertains.

Advantageous effects obtainable from the disclosure may not be limited to the above-mentioned effects, and other effects which are not mentioned herein may be clearly understood by those skilled in the art to which the disclosure pertains.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1440) including one or more instructions that are stored in a storage medium (e.g., internal memory 1436 or external memory 1438) that is readable by a machine (e.g., the electronic device 1401). For example, a processor (e.g., the processor 1420) of the machine (e.g., the electronic device 1401) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A wearable electronic device 501 configured to be worn on a head of a user, comprising:
a camera 510;
a communication circuit 550;
at least one processor 520: and
memory storing instructions, wherein the instructions, when executed by the at least one processor cause the wearable electronic device to:
identify an external electronic device 401 for controlling an input of the wearable electronic device while an input method of the wearable electronic device is operating in a first mode,
based on identifying the external electronic device, receive, through the communication circuit, first information about at least one sensor of a plurality of sensors 431, 432, and 433 included in the external electronic device, the at least one sensor sensing a touch by a user's grip on the external electronic device,
based on the first information, change the input method of the wearable electronic device from the first mode to a second mode corresponding to the at least one sensor among a plurality of modes using the external electronic device.

2. The wearable electronic device of claim 1, wherein the instructions, when executed by the at least one processor cause the wearable electronic device to:
based on identifying that a first sensor corresponding to a first position and a second sensor corresponding to a second position among the plurality of sensors included in the external electronic device sense the touch by the user's grip, change the first mode to a controller mode for identifying the input of the wearable electronic device using the external electronic device.

3. The wearable electronic device of any one of claims 1 to 2, wherein the instructions, when executed by the at least one processor cause the wearable electronic device to:
deactivate elements included in the external electronic device and unrelated to the controller mode while the input method of the wearable electronic device is operating in the controller mode.

4. The wearable electronic device of any one of claims 1 to 3, wherein the instructions, when executed by the at least one processor cause the wearable electronic device to:
based on receiving the first information indicating that the first sensor corresponding to the first position and the second sensor corresponding to the second position sense the touch by the user's grip even if the external electronic device is not identified, change the first mode to a controller mode for identifying the input of the wearable electronic device using the external electronic device.

5. The wearable electronic device of any one of claims 1 to 4, wherein the instructions, when executed by the at least one processor cause the wearable electronic device to:
based on identifying that a first sensor corresponding to a first position and a third sensor corresponding to a third position among the plurality of sensors included in the external electronic device sense the touch by the user's grip, change the first mode to a handwriting mode for inputting a handwriting input using the external electronic device.

6. The wearable electronic device of any one of claims 1 to 5, wherein the instructions, when executed by the at least one processor cause the wearable electronic device to:
after changing the input method of the wearable electronic device to the handwriting mode, receive, through the communication circuit, information about a pressure on a tip included in the external electronic device; and
identify the handwriting input based on the information about the pressure.

7. The wearable electronic device d of any one of claims 1 to 6, wherein the instructions, when executed by the at least one processor cause the wearable electronic device to:
deactivate elements included in the external electronic device and unrelated to the handwriting mode while the input method of the wearable electronic device is operating in the handwriting mode.

8. The wearable electronic device of any one of claims 1 to 7, wherein the instructions, when executed by the at least one processor cause the wearable electronic device to:
based on receiving the first information indicating that the first sensor corresponding to the first position and the third sensor corresponding to the third position sense the touch by the user's grip even if the external electronic device is not identified, change the first mode to a handwriting mode for inputting a handwriting input using the external electronic device.

9. The wearable electronic device of any one of claims 1 to 8,
wherein the plurality of sensors included in the external electronic device are disposed on a handle portion of the external electronic device, and the plurality of sensors included in the external electronic device are disposed at different locations from each other.

10. The wearable electronic device of any one of claims 1 to 9, wherein the instructions, when executed by the at least one processor cause the wearable electronic device to:
after the input method of the external electronic device is changed to the second mode corresponding to the at least one sensor, identify whether the at least one sensor senses the touch by the user's grip through the external electronic device,
based on identifying that the at least one sensor senses the touch by the user's grip, maintain the second mode, and
based on identifying that the at least one sensor does not sense the touch by the user's grip, change the second mode to the first mode.

11. An operating method of a wearable electronic device (501) configured to be worn on the head of a user, the method comprising:
identifying an external electronic device (401) configured to control an input of the wearable electronic device while an input method of the wearable electronic device (501) is operating in a first mode;
based on identifying the external electronic device, receiving first information about at least one sensor of a plurality of sensors (431, 432, and 433) included in the external electronic device, the at least one sensor having sensed a touch by a user's grip on the external electronic device; and
based on the first information, changing the input method of the wearable electronic device from the first mode to a second mode corresponding to the at least one sensor among a plurality of modes for controlling an input of the wearable electronic device by using the external electronic device.

12. The operating method of claim 11, wherein the changing of the first mode to the second mode comprises, when identifying that a first sensor corresponding to a first position and a second sensor corresponding to a second position among the plurality of sensors included in the external electronic device have sensed the touch by the user's grip, changing the first mode to a controller mode for identifying the user input for the wearable electronic device by using the external electronic device.

13. The operating method of one of claims 11 and 12, further comprising deactivating elements included in the external electronic device and unrelated to the controller mode while operating the input method of the wearable electronic device in the controller mode.

14. The operating method of one of claims 11 to 13, further comprising, when receiving, from the external electronic device, the first information indicating that the first sensor corresponding to the first position and the second sensor corresponding to the second position among the plurality of sensors have sensed the touch by the user's grip even if the external electronic device has not been identified, changing the first mode to the controller mode for identifying a user input for the wearable electronic device by using the external electronic device.

15. The operating method of one of claims 11 to 14, wherein the changing of the first mode to the second mode comprises, when identifying that the first sensor corresponding to the first position and a third sensor corresponding to a third position among the plurality of sensors included in the external electronic device have sensed the touch by the grip, changing the first mode to a handwriting mode for inputting a handwriting input by using the external electronic device.
